# EUROPÄISCHE PATENTSCHRIFT

(11) **EP 0 807 569 B1**
(45) Veröffentlichungstag und Bekanntmachung des Hinweises auf die Patenterteilung: **20.08.2003**
(21) Anmeldenummer: 97103188.5
(22) Anmeldetag: 27.02.1997
(51) Int. Cl.: B62M 9/16

(54) **Vorrichtung zum Auskuppeln einer Fahrradkette**
Device for disengaging a bicycle chain
Dispositif de débrayage pour chaîne de bicyclette

(30) Priorität: 17.05.1996 DE 19620026
(43) Veröffentlichungstag der Anmeldung: 19.11.1997
(73) Patentinhaber: MP Marketing & Promotion, Dipl.-Kfm. Wunderlich GmbH, 82152 Planegg (DE)
(72) Erfinder: Wunderlich, Hans-Dieter, 82152 Planegg (DE)
(74) Vertreter: Grättinger & Partner (GbR)

(56) Entgegenhaltungen:
- DE-A- 2 648 928
- FR-A- 2 451 855
- US-A- 3 840 251
- US-A- 3 862 487
- US-A- 4 167 125

## Beschreibung

Die Erfindung betrifft eine Vorrichtung zum Auskuppeln einer Fahrradkette und deren Übergabe von einem Zahnkranz des Hinterrads an eine mit dem Fahrradrahmen verbundene Führung zum Abstützen der Kette in gestreckter Stellung zwecks Demontage des Hinterrads.

Bei einer bekannten Vorrichtung der genannten Art (US-3840251) ist eine sichelförmige Führungskante in axialer Richtung mittels eines Hebels zwischen zwei Stellungen veränderbar. Zwecks Übernahme der Fahrradkette wird die Führungskante gegen den äußeren Zahnkranz geschoben, wonach durch entsprechende Betätigung des Kettenwechslers der Gangschaltung des Fahrrads die Kette über den Zahnkranz, an welchem die Führungskante anliegt, gelegt wird.

Danach kann das Hinterrad entfernt werden. Die Kette verbleibt auf der Führungskante, wobei sie durch den Kettenwechsler zwischen der Führungskante und dem vorderen Kettenrad gespannt ist.

Auf die erläuterte Weise kann die Fahrradkette von einem hinteren Zahnkranz auf die Führungskante abgelegt werden, ohne daß es dabei einer Manipulation der Kette bedarf. Voraussetzung ist allerdings, daß das Fahrrad mit einer Kettenrad-Gangschaltung versehen ist.

Obige Voraussetzung trifft auch auf andere dem gleichen Zweck dienende bekannte Vorrichtungen zu (DE-2648928-A1, FR-7907474-A1), bei denen eine rahmenfeste Führungskante, welche bogenförmig um die Radachse verläuft, auf der Rahmeninnenseite dicht neben dem äußeren Zahnkranz der hinteren Antriebszahnräder vorgesehen ist.

Diesen beiden bekannten Lösungen ist gemeinsam, daß die Kette bei der Übergabe in axialer Richtung bewegt wird, bis sie sich außerhalb des äußeren Zahnkranzes befindet. Dazu ist ein entsprechender Platzbedarf in axialer Richtung erforderlich, was konstruktiv durch eine entsprechende Bemessung der Hinterrad-Achsstummel sowie der Hinterradgabel zu berücksichtigen ist.

Ein zusätzlicher Platzbedarf in axialer Richtung ist auch bei der aus der genannten US-PS 3840251 bekannten Vorrichtung erforderlich, um die axiale Verschiebung der Führungskante zwischen einer seitlichen Ausgangsposition und der Anlageposition am äußeren Zahnkranz zu ermöglichen.

Demgegenüber liegt der Erfindung die Aufgabe zugrunde, eine Vorrichtung der eingangs genannten Art in der Weise zu verbessern, daß sie ohne zusätzlichen axialen Platzbedarf auskommt und daß sie auch bei Fahrrädern ohne Kettenrad-Gangschaltung, d.h. bei Fahrrädern mit Naben-Gangschaltung oder bei Fahrrädern ohne Gangschaltung verwendbar ist.

Nach dem erfindungsgemäßen Losungsvorschlag ist vorgesehen, daß die Führung ein in der Kettenebene verschwenkbares Stützelement umfaßt, welches aus einer von der Kette entfernten Ausgangsposition in eine die Kette von innen greifende Stützposition verschwenkbar ist.

Dabei ist also weder ein feststehendes noch ein axial verschiebliches Stützelement vorgesehen; stattdessen wird das Stützelement in der durch das obere und das untere Kettentrum aufgespannten Ebene verschwenkt, bis es die Kette von innen ergreift und gewissermaßen vom Zahnkranz abhebt.

Insbesondere bei Fahrrädern mit Kettenrad-Gangschaltung, bei welchen für das Abheben der Kette vom Zahnkranz eine ausreichende Kettenlänge vorhanden ist, eignet sich ein Stützelement, welches wenigstens eine in Richtung der Kette bogenförmige Stützkante aufweist, welche in der Stützposition an den Stegen der Kettenglieder anliegt. Die Stützkante wird dabei in Kettenrichtung eingeschwenkt, bis sie die Kette aus der Verzahnung abhebt und mit zunehmendem Einschwenken gewissermaßen deren Position übernimmt.

Bei Fahrrädern mit Nabenschaltung oder ohne Gangschaltung, bei denen also sehr wenig freie Kettenlänge, nämlich nur entsprechend dem Durchhang der Kette zur Verfügung steht, weist das Stützelement nach einem anderen erfindungsgemäßen Vorschlag wenigstens eine in Richtung der Kette bogenförmige Stützfläche auf, welche in der Stützposition an den Zuggliedern einer Kettenseite anliegt.

Vorteilhafterweise kann das Stützelement auch zwei Stützflächen für die einander gegenüberliegenden Zugglieder der Kette aufweisen, wobei die Stützflächen zweckmäßig als gegen den Zahnkranz gerichtete Stege eines die Kette von drei Seiten umschließenden U-förmigen Schwenkprofils ausgebildet sind.

Bei dieser Ausführungsform wird die Kette gewissermaßen infolge der Schwenkbewegung der Stützfläche bzw. beider Stützflächen, welche jeweils von der Seite her in die Kette eingreifen, in radialer Richtung abgehoben, wobei ein sehr geringer Hub ausreicht. Unter der durch die Stützflächen zurückgehaltenen Kette kann das Rad nach dem Lösen der beidseitigen Radmuttern aus dem Lagerschlitz austreten.

Für die erfindungsgemäßen Lösungsvorschläge ist typisch, daß die Kette nach der Übergabe in der gleichen Ebene abgestützt ist und daß die Stützkante bzw. Stützflächen der Stützelemente in radialer Richtung innerhalb der Kettenebene verschwenkt werden, wobei als Kettenebene die durch das obere und das untere Kettentrum aufgespannte Ebene verstanden wird.

Zugunsten der Erfindung ist anzuführen, daß sie keinen zusätzlichen Platzbedarf in axialer Richtung erfordert, d.h. Hinterradgabel, Hinterrad-Freilauf und -Achsstummeln können in üblicher Weise gestaltet sein.

Zum Verschwenken der Stützelemente sind von Hand betätigbare Hebel vorgesehen, die zweckmäßig nach dem Lösen des Hinterrads verschwenkt werden, wobei während des zunehmenden Verschwenkens die Kette vom Stützelement übernommen wird, während das Hinterrad aus dem Lagerschlitz austritt. Ohne daß es erforderlich ist, die Kette mit den Händen anzufassen, ist diese nach dem Entfernen des Hinterrads zwischen den Stützelementen und dem vorderen Kettenrad aufgespannt. Durch die Erfindung wird somit der Transport des Fahrradrahmens bei abmontierten Rädern erleichtert. Auch das Einbauen des Hinterrads ist problemlos, indem es in die Lagerschlitze eingeschoben wird, bis der zugeordnete Zahnkranz wieder in die Kette eingreift, wobei gleichzeitig die Stützelemente außer Eingriff geschwenkt werden.

In einer Ausgestaltung der Erfindung ist vorgesehen, daß das Stützelement benachbart der Hinterradachse an dem deren Lagerschlitz bildenden Rahmenteil angelenkt ist, derart, daß es um den Anlenkpunkt aus seiner vorderen Ausgangsposition in seine hintere Stützposition verschwenkbar ist. Diese Ausführungsform eignet sich besonders für ein Stützelement mit bogenförmiger Stützkante. Dabei kann die Stützkante wenigstens einen radial nach außen vorspringenden in die Kettenglieder eingreifenden Zahn aufweisen; durch ein oder mehrere solche Zähne kann das Stützelement auch mit Hilfe der Kette transportiert werden, indem man die Kette durch Drehen der Pedale im unbelasteten Zustand des Fahrrads antreibt. Die Antriebsrichtung richtet sich danach, ob das Stützelement mit seiner Stützkante um ihren jeweiligen Anlenkpunkt von der Innenseite der Kette gegen deren oberes oder unteres Trum eingeschwenkt wird.

Eine weitere vorteilhafte Ausführungsform besteht darin, daß die Stützkante an einem Segmentblech ausgebildet ist, welches an seinem Umfang axial nach innen gebogen ist und an seiner Innenkante einen radial nach außen gebogenen Rand in Form der Stützkante aufweist. Auf diese Weise wird der Abstand zwischen dem Anlenkort des Segmentblechs an der Innenseite der hinteren Rahmengabel des Fahrrads und der Innenseite der Kette überbrückt. Das Segmentblech ist dabei zweckmäßigerweise über ein Schwenklager an einer an der Innenseite des dem äußersten Kettenrad benachbarten Rahmenteils angebrachten Befestigungslasche angelenkt.

Am Segmentblech ist ein axial nach außen vorspringender Fingerhebel zu dessen Verschwenken vorgesehen. Der Benutzer betätigt also nur diesen Fingerhebel; seine Hände berühren bei der Übergabe der Kette an das Stützelement die Kette selbst nicht. Gleiches gilt für die erneute Montage des Hinterrads.

Bei einem Stützelement mit zwei Stützflächen für die einander gegenüberliegenden Zugglieder der Kette ist in einer vorteilhaften Gestaltung vorgesehen, daß das Schwenkprofil bogenförmig ausgebildet ist und an einem Ende um einen in mittlerer Höhe des Kettenbogens hinter der Kette befindlichen rahmenfesten Schwenkpunkt verschwenkbar ist, derart, daß die Stützflächen im Bereich des anderen Endes des Schwenkprofils die Kette nach innen abstützen.

Bisher war nur von einem Schwenkprofil die Rede; eine besonders vorteilhafte Ausgestaltung sieht vor, daß zwei Schwenkprofile etwa symmetrisch zur Horizontalen durch die mittlere Höhe des Kettenbogens angeordnet sind, welche durch einen gemeinsamen Schwenkantrieb betätigbar sind. Zweckmäßigerweise umfaßt der Schwenkantrieb einen mittels eines Schwenkhebels betätigbaren Schwenknocken, welcher mit Vorsprüngen an den einander zugewandten Enden der Schwenkprofile zusammenwirkt, derart, daß die Schwenkprofile mit ihren gegenüberliegenden Enden von innen gegen die Kette aufgespreizt werden. Dadurch, daß der Schwenknocken im wesentlichen länglich ausgebildet ist, vergrößert er bei einer Drehung um 90° den Abstand zwischen den Vorsprüngen entsprechend mit der Folge, daß die äußeren Enden der Schwenknocken von innen gegen die Kette aufgespreizt werden.

Eine die Hebelwirkung begünstigende Position der Schwenkpunkte zum Verschwenken der Schwenkprofile wird dadurch erreicht, daß der den Lagerschlitz bildende Rahmenteil nach hinten mittels einer die Schwenkpunkte für die Schwenkprofile aufnehmenden Rahmenplatte verlängert ist.

Um beim Verschwenken der Schwenkprofile für die Übergabe der Kette mit möglichst wenig Kettenlänge auszukommen, ist ferner vorgesehen, daß die Schwenkprofile derart exzentrisch an den Schwenkpunkten der Rahmenplatte angelenkt sind, daß sich die einander zugewandten Enden der Schwenkprofile bei deren Aufspreizen zur Kette hin bewegen. Durch diese Bewegung kann die Kette nach innen nachgeben, wobei gleichzeitig mit dem Verschwenken der Schwenkprofile das bereits vorher gelöste Hinterrad aus den Lagerschlitzen austritt.

Ein geeigneter Schwenkhebel zum Betätigen des Schwenknockens ist von unten um den zugeordneten Achsstummel gebogen, welcher die der Ausgangsposition entsprechende obere Anschlagstellung bildet. Der Schwenkhebel kann dicht hinter dem Achsstummel zusätzlich einen nach oben gerichteten Dorn zum Ausrücken des Achssstummels aus dem Lagerschlitz aufweisen. Während also beim Verschwenken des Schwenkhebels die Schwenkprofile zunehmend aufgespreizt werden, sorgt der Dorn für das gleichzeitige Ausrücken des gelösten Hinterrads.

Im folgenden werden zwei Ausführungsformen der Erfindung anhand der Zeichnung erläutert. Es zeigt:
- Fig. 1: eine schematische Seitenansicht der erfindungsgemäßen Vorrichtung mit zwei Schwenkprofilen in der Ausgangsposition als Schnitt gemäß I-I der Fig. 2,
- Fig. 2: eine Draufsicht zu Fig. 1,
- Fig. 3: eine Ansicht der Vorrichtung gemäß Fig. 1, jedoch in der Stützposition der Schwenkprofile,
- Fig. 4: einen Schnitt gemäß IV-IV der Fig. 3,
- Fig. 5: einen Schnitt gemäß V-V der Fig. 2,
- Fig. 6: eine etwas vereinfachte Ansicht der Vorrichtung gemäß Fig. 1, jedoch in einer Zwischenposition der Schwenkprofile,
- Fig. 7: eine schematische Seitenansicht einer anderen Ausführungsform der Vorrichtung mit einem verschwenkbaren Segmentblech in der Ausgangsposition,
- Fig. 8: eine Draufsicht auf die Vorrichtung gemäß Fig. 7,
- Fig. 9: eine Ansicht gemäß Fig. 7 mit in die Stützposition verschwenktem Segmentblech und
- Fig. 10: eine Draufsicht zu Fig. 9.

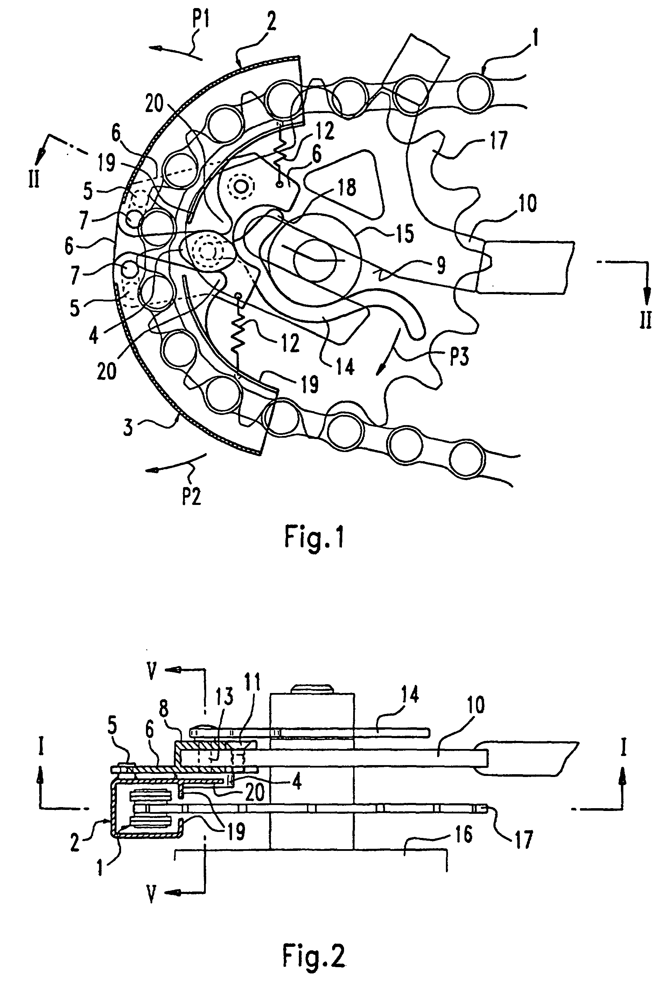

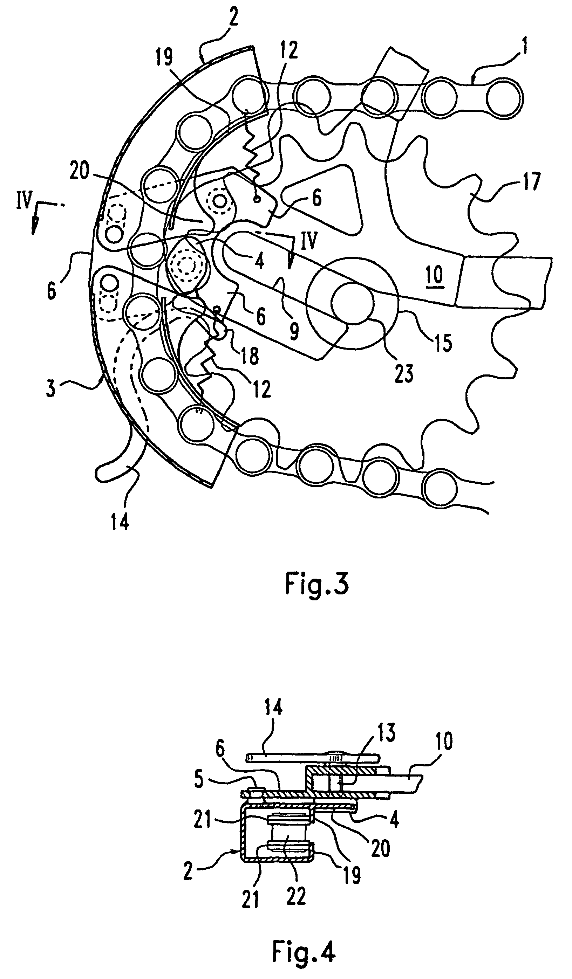

Die Fig. 1 bis 6 zeigen eine erste Ausführungsform der erfindungsgemäßen Vorrichtung. Wegen der kleinen Verstellwegent der die Stützelemente zum Abstützen der Kette 1 bildenden Schwenkprofile 2, 3 eignet sich diese Ausführungsform für Fahrräder mit Naben-Gangschaltung oder ohne Gangschaltung, bei denen der Durchhang der Kette 1 begrenzt ist. Dies ist der Grund, weshalb die Kette zum Zwecke ihrer Übergabe von einem Kettenrad auf ein Stützelement nur begrenzt vom Kettenrad abhebbar ist. Dieses Abheben besorgen die beiden Schwenkprofile 2, 3, welche durch Verdrehen einer Schwenknocke 4 mit ihren nicht angelenkten Enden radial nach außen verschwenkbar sind gemäß den Pfeilen P1, P2. Die beiden Schwenkprofile 2, 3 sind jeweils mit ihren zur Mitte des Kettenbogens hin orientierten Enden um Schwenkpunkte 5 einer Rahmenplatte 6 verschwenkbar, in welchen kurze Exzenterhebelchen 7 angeschlossen sind, die mit den Schwenkprofilen drehfest verbunden sind. Dadurch wandern die zur Mitte des Kettenbogens hin orientierten Enden der Schwenkprofile 2, 3 bei deren Aufspreizen, wie in Fig. 3 gezeigt, nach innen, wodurch nach dem Freigeben der Kette durch das Zahnrad mehr Kettenlänge für das Spreizen der Kette zur Verfügung steht. Die Rahmenplatte 6 besitzt, wie in Fig. 2 ersichtlich, einen abgewinkelten Befestigungsflansch 8, welcher das Ende des den Lagerschlitz 9 für das Hinterrad enthaltenden Rahmenteils 10 umfaßt und mittels einer Durchgangsschraube 11 mit letzterem verbunden ist. Die beiden Schwenkprofile 2, 3 werden mittels Zugfedern 12, welche an der Rahmenplatte 6 verankert sind, in ihrer Ausgangsposition gehalten, so daß sie nicht ungewollt in Eingriff mit der Kette 1 gelangen.

Der Schwenknocken 4 sitzt auf einem im Rahmenteil 10 schwenkbar gelagerten Bolzen 13, an dessen anderem Ende ein Schwenkhebel 14 befestigt ist. Der Schwenkhebel 14 untergreift mit einer entsprechenden Biegung den seitlichen Achsstummel 15 des Hinterrads, dessen Nabe 16 lediglich durch eine Umrißlinie angedeutet ist. Auf dem Achsstummel 15 sitzt drehfest das hintere Kettenrad 17, welches über die Kette 1 angetrieben wird.

Der Schwenkhebel 14 besitzt auf der hinteren Seite des Achsstummels 15 einen nach oben ragenden Dorn 18, welcher bei Betätigung des Schwenkhebels 14 in Richtung des Pfeils P3 gegen den Achsstummels 15 anfährt und diesen folglich aus dem Lagerschlitz 9 ausrückt.

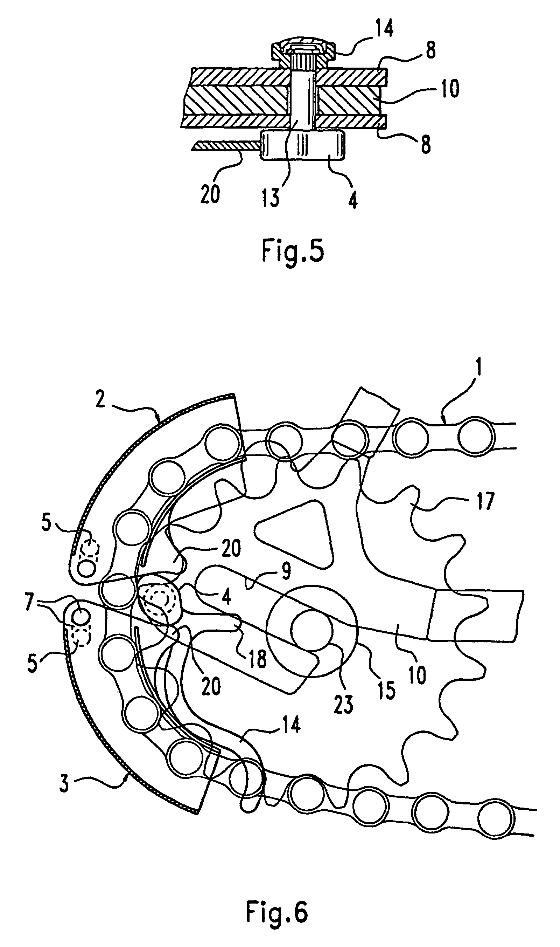

Infolge der Betätigung des Schwenkhebels 14 wird der Schwenknocken 4 aus seiner waagerechten Position gemäß Fig. 1 in seine vertikale Spreizposition gemäß Fig. 3 gedreht, wobei dessen Drehposition in Fig. 6 bei einem Schwenkwinkel von etwa 45° dargestellt ist. Das bereits vor dem Betätigen des Schwenkhebels 14 gelöste Hinterrad wird während des Verschwenkens des Schwenkhebels 14 zunächst mit Hilfe des Dorns 18 angestoßen und wandert dann zwanglos durch den schräg nach unten verlaufenden Lagerschlitz 9 nach vorne, bis es außer Eingriff mit den Kettengliedern kommt. Gleichzeitig findet die Kette 1 ihren Halt an den nach innen gegen das Zahnrad 17 verlaufenden Stützflächen 19 der Schwenkprofile, wie in den Fig. 3 und 6 sowie vergrößert in Fig. 4 dargestellt.

Die beiden Stützprofile 2, 3 umfassen etwa U-förmig das Kettenrad 17 im Bereich der Kette 1, wie in Fig. 2 verdeutlicht ist. Dort erkennt man auch den Schwenkpunkt 5 des Stützprofils 2 in der Rahmenplatte 6.

Zum Verschwenken der Stützprofile 2, 3 wirkt der Schwenknocken 4 mit diesem auf beiden Seiten zugeordneten, nach innen ragenden Vorsprüngen 20 der Stützprofile 2, 3 zusammen. Deren dem Schwenknocken 4 benachbarte Flanken werden mittels der Zugfedern 12 stets in Anlage gehalten und beim Verschwenken des Schwenknockens 4 entsprechend auseinander bewegt, bis die in Fig. 3 dargestellte maximale Schwenklage erreicht ist.

Die Fig. 1, 3 und 6 unterscheiden sich im wesentlichen nur durch die unterschiedlichen Schwenklage des Schwenkbolzens 4. Fig. 6 zeigt eine vereinfachte Darstellung insofern, als dort die Rahmenplatte 6 der besseren Übersicht wegen weggelassen ist.

Der in Fig. 4 dargestellte Ausschnitt gemäß IV-IV der Fig. 3 zeigt - nach dem Ausrücken des Zahnrads 17 - ein gegen die beiden Stützflächen 19 mit den seitlichen Zuggliedern 21 anliegendes Kettenglied, dessen Zugglieder 21 über einen Steg 22 miteinander verbunden sind.

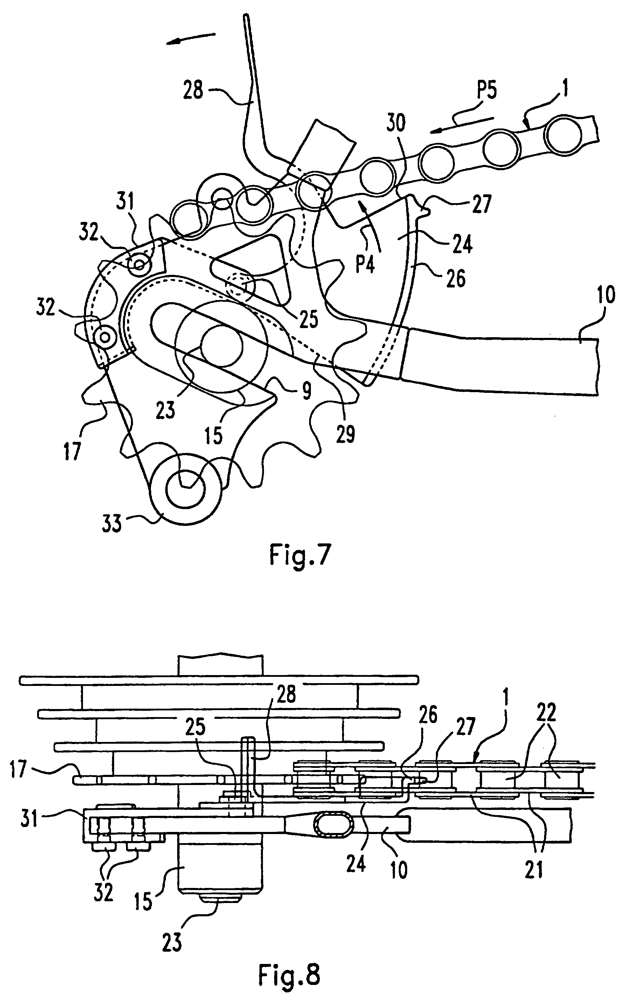

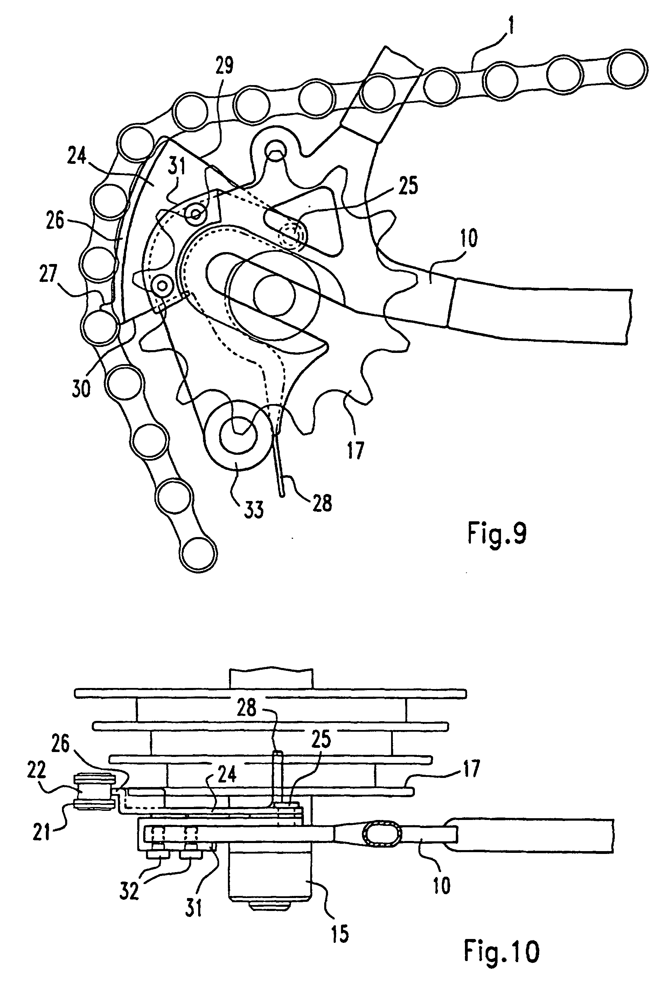

Die Fig. 7 bis 10 zeigen eine weitere Ausführungsform der Erfindung, wobei das Rahmenteil 10 mit dem Längsschlitz 9 zur Aufnahme der Radachse 23 des Hinterrads an seinem unteren Ende ein Lagerauge 33 zum Anlenken eines Hebels zum Strammen der Kette bei einer Ketten-Gangschaltung aufweist. Da bei dieser Ausführungsform genügend Kettenlänge für die Übergabe der Kette 1 an ein als Segmentblech 24 ausgebildetes Stützelement zur Verfügung steht, genügt dessen einfache Schwenklagerung um einen Anlenkpunkt 25 am Rahmen 10. Das Segmentblech 24 besitzt an seinem Umfang eine Stützkante 26 mit einem radial vorspringenden Zahn 27 am oberen Ende. Bewegt man das Segmentblech 24 mittels des daran befestigten Fingerhebels 28 im Gegenuhrzeigersinn gemäß Pfeil P4, so untergreift die Stützkante 26 die Kette 1, indem sie diese aus der Verzahnung des Zahnrads 17 abhebt, wie in Fig. 9 für den maximalen Schwenkweg dargestellt. Während das Segmentblech 24 in der Ausgangsposition gemäß Fig. 7 mit seiner unteren Flanke 29 auf dem Achsstummel 15 aufliegt, trifft dies in der Endposition gemäß Fig. 9 für dessen andere Flanke 30 zu.

Wie man in Fig. 8 erkennen kann, ist der Anlenkpunkt 25 des Segmentblechs 24 in einer das Rahmenteil 10 in dessen hinteren Bereich umfassenden Befestigungslasche 31 gelagert, welche mittels zweier Schrauben 32 im Rahmenteil 10 befestigt ist. Der Zahn 27 der Stützkante 26 erleichtert das Verschwenken des Segmentblechs 24 in Richtung des Pfeiles P4, indem die Kette 1 nach dem Eingreifen des Zahns 27 in diese nach links gemäß Pfeil P5 bewegt wird. Dabei wird mittels des Zahns 27 das Segmentblech 24 automatisch mitgenommen, bis der Zahn 27 seine in Fig. 9 gezeigte Endposition erreicht hat, in welcher er sich mit seiner gerundeten Flanke gegen einen Kettensteg 22 abstützt.

Wie in den Fig. 8 und 10 ersichtlich ist das Segmentblech 24 längs seines Umfangs zunächst um 90° axial nach innen, dann wieder um 90° radial nach außen umgebogen, so daß die dadurch gebildete Stützkante 26 genau in der Ebene des äußeren Zahnkranzes 17 der Kettenschaltung zwischen diesen und die Kette eingreift, so daß letztlich die Stützkante 26 etwa mittig an der Innenseite der Kettenstege 22 angreift.

## Patentansprüche

1. Vorrichtung an einem Fahrrad zum Auskuppeln der Fahrradkette von einem Zahnkranz (17) des Hinterrads, mittels einer mit dem Fahrradrahmen verbundenen Führung zum Abstützen der Kette (1) in gestreckter Stellung zwecks Demontage des Hinterrads,
**dadurch gekennzeichnet,**
**daß** die Führung ein in der Kettenebene verschwenkbares Stützelement umfaßt, welches aus einer von der Kette (1) entfernten Ausgangsposition in eine die Kette (1) von innen greifende Stützposition verschwenkbar ist.

2. Vorrichtung nach Anspruch 1,
**dadurch gekennzeichnet,**
**daß** das Stützelement wenigstens eine in Richtung der Kette (1) bogenförmige Stützkante (26) aufweist, welche in der Stützposition an den Stegen (22) der Kettenglieder anliegt.

3. Vorrichtung nach Anspruch 1,
**dadurch gekennzeichnet,**
**daß** das Stützelement wenigstens eine in Richtung der Kette (1) bogenförmige Stützfläche (19) aufweist, welche in der Stützposition an den Zuggliedern (21) einer Kettenseite anliegt.

4. Vorrichtung nach Anspruch 2,
**dadurch gekennzeichnet,**
**daß** das Stützelement benachbart der Hinterradachse an dem deren Lagerschlitz (9) bildenden Rahmenteil (10) angelenkt ist, derart, daß es um den Anlenkpunkt (25) aus seiner Ausgangsposition von vorne in seine Stützposition nach hinten verschwenkbar ist.

5. Vorrichtung nach Anspruch 2,
**dadurch gekennzeichnet,**
**daß** die Stützkante (26) wenigstens einen radial nach außen vorspringenden in die Kettenglieder eingreifenden Zahn (27) aufweist.

6. Vorrichtung nach Anspruch 2,
**dadurch gekennzeichnet,**
**daß** die Stützkante (26) an einem Segmentblech (24) ausgebildet ist, welches an seinem Umfang axial nach innen gebogen ist und an seiner Innenkante einen radial nach außen gebogenen Rand in Form der Stützkante (26) aufweist.

7. Vorrichtung nach Anspruch 6,
**dadurch gekennzeichnet,**
**daß** das Segmentblech (24) an einer an der Innenseite des dem äußersten Kettenrad (17) benachbarten Rahmenteils (10) angebrachten Befestigungslasche (31) angelenkt ist.

8. Vorrichtung nach Anspruch 6,
**dadurch gekennzeichnet,**
**daß** am Segmentblech (24) ein axial nach außen vorspringender Fingerhebel (28) zu dessen Verschwenken vorgesehen ist.

9. Vorrichtung nach Anspruch 3,
**dadurch gekennzeichnet,**
**daß** das Stützelement zwei Stützflächen (19) für die einander gegenüberliegenden Zugglieder (21) der Kette (1) aufweist, wobei die Stützflächen (19) als gegen den Zahnkranz (17) gerichtete Stege (22) eines die Kette (1) von drei Seiten umschließenden U-förmigen Schwenkprofils (2, 3) ausgebildet sind.

10. Vorrichtung nach Anspruch 9,
**dadurch gekennzeichnet,**
**daß** das Schwenkprofil (2, 3) bogenförmig ausgebildet ist und an einem Ende um einen in mittlerer Höhe des Kettenbogens hinter der Kette (1) befindlichen rahmenfesten Schwenkpunkt (5) verschwenkbar ist, derart, daß die ausgeschwenkten Stützflächen (19) im Bereich des anderen Endes des Schwenkprofils (2, 3) die Kette (1) nach innen abstützen.

11. Vorrichtung nach Anspruch 10,
**dadurch gekennzeichnet,**
**daß** zwei Schwenkprofile (2, 3) etwa symmetrisch zur Horizontalen durch die mittlere Höhe des Kettenbogens angeordnet sind, welche durch einen gemeinsamen Schwenkantrieb betätigbar sind.

12. Vorrichtung nach Anspruch 11,
**dadurch gekennzeichnet,**
**daß** der Schwenkantrieb einen mittels eines Schwenkhebels (14) betätigbaren Schwenknocken (4) umfaßt, welcher mit Vorsprüngen (20) an den einander zugewandten Enden der Schwenkprofile (2, 3) zusammenwirkt, derart, daß die Schwenkprofile (2, 3) mit ihren gegenüberliegenden Enden von innen gegen die Kette (1) aufgespreizt werden.

13. Vorrichtung nach Anspruch 12,
**dadurch gekennzeichnet,**
**daß** der den Lagerschlitz (9) bildende Rahmenteil (10) nach hinten mittels einer die Schwenkpunkte (5) für die Schwenkprofile aufnehmenden Rahmenplatte (6) verlängert ist.

14. Vorrichtung nach Anspruch 13,
**dadurch gekennzeichnet,**
**daß** die Schwenkprofile (2, 3) derart exzentrisch an den Schwenkpunkten (5) der Rahmenplatte angelenkt sind, daß sich die einander zugewandten Enden der Schwenkprofile (2, 3) bei deren Aufspreizen zur Kette (1) hin bewegen.

15. Vorrichtung nach Anspruch 12,
**dadurch gekennzeichnet,**
**daß** der Schwenkhebel (14) von unten um den zugeordneten Achsstummel (15) gebogen ist, welcher die der Ausgangsposition entsprechende obere Anschlagstellung bildet.

16. Vorrichtung nach Anspruch 15,
**dadurch gekennzeichnet,**
**daß** der Schwenkhebel (14) dicht hinter dem Achsstummel (15) einen nach oben gerichteten Dorn (18) zum Ausrücken des Achsstummels (15) aus dem Lagerschlitz (9) aufweist.

## Claims

1. A device on a bicycle for the uncoupling of the bicycle chain from a gear ring (17) of the rear wheel, by means of a guide connected to the bicycle frame for supporting the chain (1) in the stretched position for the purpose of dismantling the back wheel,
**characterised in that**
the guide comprises a supporting element capable of swivelling in the plane of the chain, which supporting element is capable of swivelling out of an initial position distant from the chain (1) into a supporting position engaging the chain (1) from inside.

2. The device according to claim 1,
**characterised in that**
the supporting element has at least one supporting edge (26) curved in the direction of the chain (1), which supporting edge is adjacent in the supporting position to the studs (22) of the chain links.

3. The device according to claim 1,
**characterised in that**
the supporting element has at least one supporting surface (19) curved in the direction of the chain (1), which supporting surface is adjacent in the supporting position to the tension members (21) of one chain side.

4. The device according to claim 2,
**characterised in that**
the supporting element neighbouring the rear-wheel axle is linked to the frame part (10) forming its bearing slot (9) in such a way that it can be swivelled about the link point (25) out of its initial position from the front into its supporting position to the rear.

5. The device according to claim 2,
**characterised in that**
the supporting edge (26) has at least one tooth (27) projecting radially outwards and engaging in the chain links.

6. The device according to claim 2,
**characterised in that**
the supporting edge (26) is formed on a segmental plate (24), which is bent axially inwards at its periphery and has at its inner edge a rim bent radially outwards in the shape of the supporting edge (26).

7. The device according to claim 6,
**characterised in that**
the segmental plate (24) is linked to a fixing strap (31) fitted on the inside of the frame part (10) neighbouring the outermost chain wheel (17).

8. The device according to claim 6,
**characterised in that**
there is provided on the segmental plate (24) a finger lever (28) projecting axially outwards for the swivelling thereof.

9. The device according to claim 3,
**characterised in that**
the supporting element has two supporting surfaces (19) for the tension members (21) of the chain (1) lying opposite one another, whereby the supporting surfaces (19) are designed as studs (22) of a U-shaped swivelling profile (2, 3) surrounding the chain (1) from three sides, said studs being directed towards the gear ring (17).

10. The device according to claim 9,
**characterised in that**
the swivelling profile (2, 3) is designed curved and is capable of swivelling at one end about a swivelling point (5) fixed with respect to the frame and located at the midpoint height of the chain arc behind the chain (1), in such a way that the swivelled-out supporting surfaces (19) support the chain (1) inwards in the area of the other end of the swivelling profile (2, 3).

11. The device according to claim 10,
**characterised in that**
two swivelling profiles (2, 3) are arranged roughly symmetrical to the horizontal line through the midpoint height of the chain arc, which swivelling profiles can be actuated by a common swivel drive.

12. The device according to claim 11,
**characterised in that**
the swivel drive comprises a swivelling cam (4) capable of being actuated by means of the swivelling lever (14), which swivelling cam cooperates with projections (20) on the ends of the swivelling profiles (2, 3) facing one another, in such a way that the swivelling profiles (2, 3) with their ends lying opposite one another are forced apart from inside against the chain (1).

13. The device according to claim 12,
**characterised in that**
the frame part (10) forming the bearing slot (9) is lengthened to the rear by means of a frame plate (6) accommodating the swivelling points (5) for the swivelling profiles.

14. The device according to claim 13,
**characterised in that**
the swivelling profiles (2, 3) are linked eccentrically to the swivelling points (5) of the frame plate in such a way that the ends of the swivelling profiles (2, 3) facing one another move towards the chain (1) when they are forced apart.

15. The device according to claim 12,
**characterised in that**
the swivelling lever (14) is bent from below around the assigned axle stub (15), which forms the upper stop position corresponding to the initial position.

16. The device according to claim 15,
**characterised in that**
the swivelling lever (14) close behind the axle stub (15) has a peg (18) pointing upwards for shifting the axle stub (15) out of the bearing slot (9).

## Revendications

1. Dispositif au niveau d'une bicyclette pour le débrayage de la chaîne de bicyclette d'un grand pignon (17) de la roue arrière, au moyen d'une glissière de guidage reliée au cadre de la bicyclette pour appuyer la chaîne (1) en position tendue à des fins de démontage de la roue arrière,
**caractérisé en ce que**
la glissière de guidage comprend un élément d'appui pouvant pivoter au niveau de la chaîne, qui peut pivoter d'une position de départ éloignée de la chaîne (1) à une position d'appui grippant la chaîne (1) de l'intérieur.

2. Dispositif selon la revendication 1,
**caractérisé en ce que**
l'élément d'appui présente au moins une face d'appui (26) en arc dans le sens de la chaîne (1), qui est adjacente aux étançons (22) des maillons dans la position d'appui.

3. Dispositif selon la revendication 1,
**caractérisé en ce que**
l'élément d'appui présente au moins une surface d'appui (19) en arc dans le sens de la chaîne (1), qui est adjacente aux membres tendeurs (21) d'un côté de la chaîne dans la position d'appui.

4. Dispositif selon la revendication 2,
**caractérisé en ce que**
l'élément d'appui est articulé de manière adjacente à l'essieu arrière au niveau de la partie de cadre (10) formant sa fente de palier (9) de telle sorte qu'il puisse pivoter autour du point d'articulation (25), de sa position de'départ de devant à sa position d'appui vers l'arrière.

5. Dispositif selon la revendication 2,
**caractérisé en ce que**
la face d'appui (26) présente au moins une dent (27) s'engrenant dans les maillons, saillant vers l'extérieur de manière radiale.

6. Dispositif selon la revendication 2,
**caractérisé en ce que**
la face d'appui (26) est formée au niveau d'une tôle en segment (24) qui est courbée vers l'intérieur de manière axiale au niveau de sa circonférence et présente, au niveau de sa face intérieure, un bord courbé vers l'extérieur de manière radiale sous la forme de la face d'appui (26).

7. Dispositif selon la revendication 6,
**caractérisé en ce que**
la tôle en segment (24) est articulée au niveau d'une éclisse de fixation (31) montée au niveau du côté intérieur de la partie de cadre (10) adjacente au plateau extérieur (17).

8. Dispositif selon la revendication 6,
**caractérisé en ce**
**qu'**est prévu, au niveau de la tôle en segment (24), un arbre de doigt (28), saillant vers l'extérieur de manière axiale, pour son pivotement.

9. Dispositif selon la revendication 3,
**caractérisé en ce que**
l'élément d'appui présente deux surfaces d'appui (19) pour les membres tendeurs (21) de la chaîne (1) opposés l'un à l'autre, les surfaces d'appui (19) étant formées comme des étais (22), tournés vers le grand pignon (17), d'un profil pivotant (2, 3) en U entourant la chaîne (1) de trois côtés.

10. Dispositif selon la revendication 9,
**caractérisé en ce que**
le profil pivotant (2, 3) est conçu en arc et peut pivoter, au niveau d'une extrémité, autour d'un point de pivotement (5) fixé au cadre, situé à mi-hauteur de l'arc de chaîne derrière la chaîne (1), de telle sorte que les surfaces d'appui (19) pivotées appuient la chaîne (1) vers l'intérieur dans la zone de l'autre extrémité du profil pivotant (2, 3).

11. Dispositif selon la revendication 10,
**caractérisé en ce que**
deux profils pivotants (2, 3) sont disposés de manière à peu près symétrique à l'horizontale à mi-hauteur de l'arc de chaîne, qui sont actionnables par l'intermédiaire d'un actionnement de pivotement commun.

12. Dispositif selon la revendication 11,
**caractérisé en ce que**
l'actionnement de pivotement comprend une came de pivotement (4) actionnable au moyen d'un levier pivotant (14), qui interagit avec des saillies (20) au niveau des extrémités tournées l'une vers l'autre des profils pivotants (2, 3), de telle sorte que les profils pivotants (2, 3) sont écartés avec leurs extrémités opposées de l'intérieur en direction de la chaîne (1).

13. Dispositif selon la revendication 12,
**caractérisé en ce que**
la partie de cadre (10) formant la fente de palier (9) est prolongée vers l'arrière au moyen d'une plaque de cadre (6) contenant les points pivotants (5) pour les profils pivotants.

14. Dispositif selon la revendication 13,
**caractérisé en ce que**
les profils pivotants (2, 3) sont articulés de telle manière excentrique au niveau des points pivotants (5) de la plaque de cadre que les extrémités tournées l'une vers l'autre des profils pivotants (2, 3) se déplacent en direction de la chaîne (1) lorsqu'elles sont écartées.

15. Dispositif selon la revendication 12,
**caractérisé en ce que**
le levier pivotant (14) est courbé d'en bas autour du tourillon (15) affecté, qui forme la position d'arrêt supérieure correspondant à la position de départ.

16. Dispositif selon la revendication 15,
**caractérisé en ce que**
le levier pivotant (14) présente, collé derrière le tourillon (15), un mandrin (18) tourné vers le haut pour débrayer le tourillon (15) de la fente de palier (9).
